Europäisches Patentamt

European Patent Office

Office européen des brevets

(19)

(11) Numéro de publication : **0 398 798 B1**

# (12) FASCICULE DE BREVET EUROPEEN

(45) Date de publication du fascicule du brevet :
**14.07.93 Bulletin 93/28**

(21) Numéro de dépôt : **90401290.3**

(22) Date de dépôt : **15.05.90**

(51) Int. Cl.⁵ : **C11B 9/02, A23L 1/221**

(54) **Extraction de produits naturels assistée par micro-ondes.**

(30) Priorité : **16.05.89 CA 600322**

(43) Date de publication de la demande :
**22.11.90 Bulletin 90/47**

(45) Mention de la délivrance du brevet :
**14.07.93 Bulletin 93/28**

(84) Etats contractants désignés :
**CH ES FR IT LI**

(56) Documents cités :
**AU-A- 578 313**
**FR-A- 1 201 108**
**GB-A- 2 004 197**
**US-A- 2 925 328**
**US-A- 3 025 220**

(73) Titulaire : **HER MAJESTY THE QUEEN IN RIGHT OF CANADA AS REPRESENTED BY THE MINISTER OF ENVIRONMENT CANADA Ottawa, Ontario, K1A 0H3 (CA)**

(72) Inventeur : **Paré, Jocelyn, J.R.**
**2759 Carousel Crescent, Suite 303**
**Gloucester, Ontario K1T 2N5 (CA)**
Inventeur : **Sigouin, Michel**
**1036 rue des Bouleaux**
**Saint-Pie-de-Bagot, Québec J0H 1WO (CA)**
Inventeur : **Lapointe, Jacques**
**2840 Bld.des Gouverneurs Apt. 8**
**Saint-Hyacinthe, Québec J2S 1B2 (CA)**

(74) Mandataire : **Phélip, Bruno et al**
**c/o Cabinet Harlé & Phélip 21, rue de La Rochefoucauld**
**F-75009 Paris (FR)**

## Description

Cette invention traite d'une nouvelle méthode d'extraction de produits naturels solubles à partir de matériel biologique qui utilise un applicateur à micro-ondes comme source d'énergie. En particulier, l'invention fournit une technique par laquelle des produits naturels peuvent être etxraits sélectivement, en un temps relativement court par rapport aux méthodes traditionnelles d'extraction et permet un rendement d'extraction accru pour les composantes plus volatiles qui nécessitent normalement des méthodes d'extraction spéciales et distinctes. De plus, l'invention permet également d'extraire directement du matériel frais sans avoir à le sécher au préalable; cette dernière étape est un prérequis pour plusieurs autres méthodes.

### État des connaissances et de la technologie

Des grains contenant des gras et des huiles ont été séchés par micro-ondes avant d'être décortiqués et extraits pour leurs huiles, *e.g.* voir Gannon, Brevet américain n° 4 464 402, 07 août 1984. Des grains et des graines ont également été extraits en utilisant des micro-ondes pour chauffer le solvant, *e.g.* voir Ganzler et Salgo, *Z. Lebensm. Unters. Forsch.* **184**, 274-276(1987). Le séchage par micro-ondes d'autres aliments, suivi d'une extraction par solvant, a été utilisé comme procédure analytique, *e.g.* voir Collins, Brevet américain n° 4 554 132, 19 novembre 1985. Dans le brevet de Byrne, Royaume-Uni n° 1 209 675, 21 octobre 1970, des fruits de palme sont chauffés par micro-ondes suffisamment pour désactiver les enzymes présents avant d'extraire l'huile de palme au solvant. Le brevet canadien n° 987 993, 27 avril 1976, de Heitkamp *et al.* décrit une migration induite par micro-ondes des constituantes sapides et aromatiques vers la surface de tissus de plantes telles le tabac et le thé en présence d'humidité et, optionnellement, de solvant. La saveur et l'arôme étaient accrus quand le thé ou le tabac était consommé subséquemment. Aucune mention n'a été faite quant à un accroissement d'extraction de composantes dans un solvant: la puissance des micro-ondes et la quantité de solvant utilisées étant trop faibles pour que ce phénomène ait pu se produire. Un courant d'air a été circulé au-dessus de matériel végétal qui était soumis à une irradiation aux micro-ondes créant ainsi un échantillon de substances volatiles semblable à celui obtenu lors d'un échantillonage par espace de tête, *e.g.* voir Craveiro *et al, Flav. Frag. J.* 4, 43-44(1989).

Le besoin d'une méthode générale d'extraction qui peut être utilisée avec du matériel végétal de diverses origines est bien connu. L'industrie alimentaire, en particulier, requiert des méthodes qui sont polyvalentes, relativement peu coûteuses à exploiter et qui n'impliquent pas d'opérations compliquées qui augmentent les risques de bris et de dangers à la santé pour l'employé et pour le consommateur.

AU-A-578.313 décrit un procédé d'extraction dans lequel on applique à un matériel végétal une fréquence comprise dans la gamme de 20.000 à 30.000 Hertz.

GB-A-2.004.197 décrit un procédé d'extraction d'une substance végétale utilisant des ultrasons.

### Résumé de l'invention

En accord avec la présente invention, un protocole d'extraction de divers produits naturels qui seraient acceptables, sans y être limités, à la consommation humaine, peut être effectué (plus sélectivement, plus efficacement, plus rapidement, avec moins de dangers associés à l'inflammabilité et moins de possibilités d'erreurs humaines) quand un applicateur micro-ondes est utilisé pour générer une hausse soudaine de la température à l'intérieur du matériel biologique, *e.g.* le système glandulaire de matériel végétal, qui est en contact (préférablement immergé dans un contenant) avec une quantité appropriée d'un solvant d'extraction donné qui est (a) transparent aux micro-ondes de façon à maintenir l'environnement qui entoure le matériel végétal froid par rapport à la température interne du matériel végétal, ou (b) partiellement transparent lorsqu'un échauffement est permis ou désirable.

Cette invention comprend un procédé pour l'extraction de produits solubles à partir de matériels biologiques comprenant les étapes qui consistent:

(a) - à prévoir du matériel biologique sous forme subdivisée possédant une composante dispersée qui absorbe les micro-ondes;

(b) - à mettre en contact ledit matériel subdivisé avec un extractant qui est transparent ou partiellement transparent aux micro-ondes et qui absorbe moins les micro-ondes que la composante dispersée en (a);

(c) - à exposer le matériel subdivisé lorsqu'il est en contact avec suffisamment d'extractant pour permettre l'extraction à des micro-ondes possédant une fréquence qui est absorbée par ladite composante dudit matériel jusqu'à ce que ledit matériel soit chauffé de préférence à l'extractant et que l'extraction soit complétée substantivement;

(d) - à séparer le matériel résiduel de la phase extractante et éventuellement

(e) à récupérer le produit extrait.

Selon une facette de cette invention, dans les cas où le matériel biologique est dépourvu d'humidité, l'extractant peut être partiellement transparent aux micro-ondes et une partie de l'extractant est imprégné dans le matériel biologique de façon à devenir une composante dispersée absorbant les micro-ondes, avant que l'étape (c) ne soit effectuée. Alternativement, le matériel peut être hydraté ou réhydraté avec une quantité suffisante d'eau pour permettre l'absorption de micro-ondes recherchée.

Préférablement, dans les cas où le matériel biologique contient des composantes volatiles ou labiles, l'extractant est choisi pour sa grande transparence aux micro-ondes. Si des composantes labiles ou volatiles et indésirables sont présentes, l'extractant peut être choisi pour sa transparence partielle aux micro-ondes de façon à ce qu'un échauffement, dû à l'absorption de micro-ondes, se produise et soit suffisant pour éliminer ces mêmes composantes indésirables.

Selon une autre facette de cette invention, le matériel extrait après l'étape (d) peut être mis en contact avec un deuxième extractant de nature différente et exposé aux micro-ondes pour une seconde fois afin d'obtenir un deuxième produit d'extraction.

La dose de micro-ondes appliquée au matériel devrait être choisie de façon à maximiser l'extraction des composantes recherchées.

## Description détaillée

Le mode d'action de ce procédé d'extraction a été étudié par microscopie électronique à balayage, alors que les effets du traitement aux micro-ondes sur les systèmes glandulaire et vasculaire du matériel végétal étaient visualisés et comparés à ceux produits lorsque d'autres méthodes d'extraction traditionnelles sont appliquées individuellement à du matériel végétal de la même espèce.

Ces études ont permis de conclure que le procédé d'irradiation aux micro-ondes agit comme suit: les micro-ondes traversent librement l'extractant transparent aux micro-ondes et atteignent les systèmes vasculaire et glandulaire du matériel biologique (un milieu transparent aux micro-ondes peut être défini comme un milieu caractérisé par une très faible constante diélectrique, *e.g.* hexane (1,9), tétrachlorure de carbone (2,2) et du bioxyde de carbone liquide (1,6 à 0 °C et à 50 atm.), par opposition à des substances à fortes constantes diélectriques telles que l'eau (80,4)). Dans certains cas, des extractants partiellement transparents aux micro-ondes tels que l'éthanol (24,3) ou le dichlorométhane (9,1) peuvent être utilisés. Une fraction non négligeable de ces micro-ondes est absorbée par le matériel biologique: l'efficacité de l'absorption dépend largement du contenu en eau (ou de la composante absorbante ajoutée) du matériel au moment où le procédé d'extraction est effectué. Le résultat est une soudaine augmentation de la température à l'intérieur du matériel. Cette augmentation de température est plus grande à l'intérieur des systèmes vasculaire et glandulaire. La température continue de croître jusqu'à ce que la pression interne excède la capacité d'expansion des parois cellulaires, ce qui donne lieu à une explosion à l'échelle cellulaire. Les substances qui étaient situées à l'intérieur des cellules peuvent s'écouler librement vers l'extérieur. Elles migrent vers le milieu environnant qui, quant à lui, est relativement froid et peut les capter et les dissoudre. Le matériel solide peut être enlevé, *e.g.* par filtration, et la solution résultante peut être utilisée de la même façon que tout autre extrait de produits naturels.

La quantité d'extractant utilisée varie largement, mais devrait être suffisante pour extraire quantitativement toutes les composantes recherchées. Le rapport d'extractant au matériel à être extrait (L. kg$^{-1}$) peut, par exemple, varier de 1:1 à 20:1.

Un examen approfondi des micrographies électroniques de matériel végétal fraîchement extrait démontre que le niveau de dislocation qui affecte la structure interne du système glandulaire de, *e.g.* la menthe poivrée du Canada, est aussi élevé pour une extraction induite par un traitement de 20 secondes aux micro-ondes que pour des extractions plus traditionnelles de 2 heures par entraînement à la vapeur ou de 6 heures par soxhlet. Les micrographies électroniques fournissent également une explication pour la qualité supérieure de l'extrait obtenu, alors que la durée relativement courte d'extraction (de l'ordre de 2 ou 3 minutes au total) amène un nouveau paramètre qui peut être varié par l'utilisateur de cette invention, soit le pouvoir de pénétration de l'extractant utilisé. Dans le cas de l'huile essentielle de menthe poivrée par exemple, et en utilisant de l'hexane comme extractant, la courte durée de l'extraction ne permet pas aux pigments et à d'autres composantes indésirables qui sont situées à l'intérieur de diverses membranes et autres parties similaires du matériel végétal d'être atteints par l'hexane, dont l'action pénétrante est grandement réduite pour des morceaux de matériel frais coupés lâchement, mais non moulus, tel qu'utilisé dans ce procédé d'extraction assisté par micro-ondes.

Du matériel bien moulu (ou tout au moins bien broyé) est utilisé pour l'entraînement à la vapeur classique et pour d'autres procédés d'extraction où le calibre du matériel à extraire est d'importance, ce qui implique une opération ou une étape de plus vis-à-vis de la présente invention. Un simple examen visuel à l'oeil nu corrobore ce phénomène, alors que les extraits obtenus par ce procédé micro-ondes sont moins colorés (moins pigmentés) que les extraits correpondants obtenus par entraînement à la vapeur.

Une autre caractéristique importante de cette invention a trait à la possibilité d'utiliser un sytème de milieux d'extraction, en tant qu'un seul extractant ou en tant que deux, ou plusieurs, extractants en série, de façon à obtenir des extraits fractionnés en quelques minutes et en utilisant le même appareillage. La technologie actuelle requiert des procédés de distillation distincts qui sont coûteux en temps et en argent. Ces procédés font appel à beaucoup d'appareillage distinct, ce qui engendre un investissement en capital bien plus grand. En fait, cette invention permet à un producteur d'effectuer une série de procédés d'extraction et de fractionnement au même site, avec le même appareillage et en moins de temps que la technologie actuelle.

La durée de l'irradiation micro-ondes requise pour effectuer l'extraction du système à l'étude varie avec l'espèce (et la variété) de la plante ou du matériel biologique utilisé (généralement, la durée est de l'ordre de 10 à 100 secondes). La durée de l'irradiation variera également avec le taux d'humidité résiduelle du matériel à extraire puisque l'eau est très efficace à absorber le rayonnement micro-ondes (du matériel plus sec nécessitera, en général, une irradiation plus longue). Le taux d'humidité peut varier beaucoup: une gamme préférée serait, dans la plupart des cas, de 40% à 90%. Cette méthode d'extraction peut être utilisée pour des procédés par lots aussi bien que pour des procédés *in continuum*, où l'extractant et le matériel à extraire passent ensemble au travers d'un applicateur micro-ondes enceint.

Le rayonnement micro-ondes est très pénétrant, cela permet d'appliquer ce procédé d'extraction à tout matériel d'origine végétal ou à tout autre matériel biologique possédant des propriétés rhéologiques semblables tels que, des anémones de mer, des concombres de mer, des algues (*e.g.* mousse irlandaise), des tissus animaux (*e.g.* du foie, des reins, des jaunes d'oeufs, *etc.*) ou d'autres biomasses telles ques des fruits et légumes déclassés, *e.g.* oignons.

La dose ou puissance totale à appliquer peut être choisie et modifiée pour chaque variété de matériel: des études préliminaires peuvent établir la valeur appropriée pour une extraction la plus efficace possible. Toute longueur d'onde à l'intérieur du spectre des micro-ondes qui peut être absorbée en partie par une composante du matériel à extraire peut être employée puisque seuls des changements mineurs à la durée de l'irradiation devront être apportés pour compenser pour les variations d'absorption. Une valeur typique de la puissance serait de 200 à 1 000 W, et une fréquence typique se situerait entre 2 000 et 30 000 MHz.

Le produit de l'extraction peut être isolé de l'extractant (après séparation du matériel solide par tamisage, filtration ou centrifugation) par au moins une méthode telle que distillation, osmose inverse, chromatographie, *etc.* Des méthodes de récupérations acceptables seront facilement identifiées par ceux possédant une bonne expertise dans le domaine. L'extractant séparé des produits de l'extraction peut être réutilisé aux mêmes fins sans autre purification.

Des exemples d'applications de cette invention où des extractions assistées par micro-ondes ont été effectuées sont fournis ci-bas. La dislocation des systèmes glandulaire et vasculaire d'une variété de matériels telle que décrite ci-haut démontre des améliorations sur un ou plusieurs aspects; ces derniers incluent accroissement du rendement, amélioration de la qualité de l'extrait, réduction en temps et en coûts de production (réduction des coûts en personnel et des coûts en frais opérationnels), réduction des coûts d'acquisition du matériel brut (à cause des coûts réduits de préparation de ce matériel), réduction du nombre d'opérations et réduction des risques reliés au procédé (vis-à-vis des humains et des facilités physiques), ou une combinaison de ces facteurs, par rapport aux procédés d'extraction présentement utilisés. Ces exemples sont illustratifs et typiques.

## EXEMPLE 1

L'huile essentielle de menthe poivrée est représentaitive d'un extrait à valeur ajoutée, conséquemment une huile essentielle de menthe poivrée (*Mentha piperita*) a été extraite (pour fins de comparaison) pendant 2 heures par entraînement à la vapeur avec un rendement d'environ 0.3% de la masse du produit végétal frais (deux extractions ont donné des rendements de 0.264 et de 0.290%). Des tissus végétaux fraîchement récoltés ont été coupés en pièces d'environ 1 cm et trois lots de 100 g ont été immergés et dispersés dans 250 mL chacun d'hexane (transparent aux micro-ondes) dans des contenants ouverts à l'air ambiant. Ces mélanges ont été soumis au traitement micro-ondes qui suit, les tissus végétaux ont ensuite été enlevés par filtration sur papier et l'huile de menthe a été récupérée de l'hexane par évaporation sous vide. Les rendements en huile ont été calculés en fonction du matériel frais. Une irradiation aux micro-ondes de 40 secondes appliquée à une puissance de 625 watts et à une fréquence de 2450 Mhz sur des tissus frais de menthe a produit une huile à un rendement comparable à ceux de l'entraînement à la vapeur de 2 heures. Trois extraits produits par irradiation aux micro-ondes ont donné des rendements de 0.474, 0.343 et 0.296% selon le niveau d'humidité résiduelle dans le matériel végétal. Quoique la qualité des extraits produits par la courte irradiation aux micro-ondes décrite ci-haut soit supérieure à celle des extraits obtenus par entraînement à la vapeur, tel que démontré par un pourcentage plus faible de pulegone et un pourcentage plus élevé de menthol et de menthone, le même facteur de pondération du revenu des ventes a été utilisé pour mettre en évidence (Tableau I) les avantages économiques reliés à l'utilisation de cette invention. Le fait que l'extrait par micro-ondes était de classement supérieur (et de plus grande valeur au marché) a été ignoré dans les coûts comparatifs établis au Tableau I où il est évident que le facteur de revenu net (ou différence entre les coûts et les revenus de vente anticipés) pour l'extraction aux micro-ondes est d'environ le double de celui pour l'entraînement à la vapeur. En d'autres mots, le Tableau I montre que l'utilisation de cette invention amènerait, dans ce cas particulier, des profits nets supérieurs de 94% à ceux obtenus par le procédé d'entraînement à la vapeur courramment employé.

## TABLEAU I

| Facteur | Entraînement à la vapeur | Procédé micro-onde |
|---|---|---|
| Revenus des ventes | 1.00 | 1.00 |
| Acquisition du matériel brut | 0.46 | 0.46 |
| Transformation | 0.24 | 0.13 |
| Main-d'oeuvre | 0.11 | 0.055 |
| Contenants et étiquetage | 0.0075 | 0.0075 |
| Facteur de revenu net | 0.18 | 0.35 |

L'exemple 2 qui suit porte sur du matériel végétal différent et présente des données plus spécifiques sur la natures des changements affectant le contenu des extraits par rapport aux extraits obtenus par entraînement à la vapeur.

### EXEMPLE 2

De la livèche écossaise avec un contenu de 90% en eau et récoltée sur la rive nord de la rivière Saguenay à environ 10 km de Chicoutimi, Québec, a été coupée en morceaux d'environ 2.5 cm ou macérée aux mêmes dimensions à l'aide d'un broyeur à grand rendement. Des lots de 100 g de matériel avec un contenu de 80% en eau ont été coupés de la même façon et dispersés dans 250 mL d'hexane et soumis à une irradiation aux micro-ondes (puissance de 625 watts et fréquence de 2450 MHz) pour 40, 50 ou 60 secondes. Des échantillons du matériel coupé et du matériel macéré (90% en eau) ont été extraits par entraînement à la vapeur pendant 90 minutes. Le rendement (%) en huile extraite a été calculé. L'apiole, une composante importante de l'extrait, a été quantifié par rapport au matériel brut et à l'huile extraite par chromatographie en phase gazeuse. Les résultats sont présentés dans le Tableau II.

## TABLEAU II

| Procédé | % apiole dans brut | % huile extraite | % apiole dans huile |
|---|---|---|---|
| Entraînement à la vapeur (90 min.; morceaux de 2.5 cm) | 0.151 | 0.225 | 67.1 |
| Entraînement à la vapeur (90 min.; matériel macéré) | 0.139 | 0.210 | 66.3 |
| Irradiation aux micro-ondes (40 s.; dans hexane) | 0.130 | 0.165 | 78.8 |
| Irradiation aux micro-ondes (50 s.; dans hexane) | 0.136 | 0.180 | 75.6 |
| Irradiation aux micro-ondes (60 s.; dans hexane) | 0.121 | 0.161 | 75.2 |

La valeur au marché de l'huile essentielle de livèche écossaise dépend énormément de son contenu en apiole. Le Tableau II démontre qu'un contenu plus grand en apiole dans l'huile essentielle de livèche écossaise est obtenu quand cette invention est utilisée au lieu de l'entraînement à la vapeur.

Le Tableau II montre que l'utilisation de cette invention, dans cet exemple particulier, a produit un volume un peu plus petit (de 25%) d'huile essentielle mais dont la qualité, telle que définie par son contenu en apiole, était supérieure (de 15%). De plus, les extraits aux micro-ondes rapportés dans le Tableau II, ont été obtenus à partir de matériel ne contenant que 80% d'humidité résiduelle alors que le matériel utilisé pour fabriquer l'extrait par entraînement à la vapeur contenait 90% d'humidité résiduelle. Le matériel utilisé pour l'extraction aux micro-ondes était moins onéreux à acquérir de par son prix d'achat réduit (vendu au poids) et à cause de son contenu absolu réduit en apiole (l'apiole est entraîné par l'eau alors que cette dernière s'évapore). Il y a lieu de noter que le procédé d'extraction aux micro-ondes non seulement a fourni un meilleur rendement en apiole, mais il l'a fourni avec du matériel qui contenait, au départ, moins d'apiole. Ceci démontre clairement la valeur ajoutée obtenue en utilisant cette invention. Le résultat tangible de cet exemple particulier est qu'un revenu net supérieur (parce que la combinaison de deux facteurs, soit un coût d'approvisionnement réduit pour le matériel brut et un extrait de valeur de vente supérieure dépasse le facteur de production quelque peu réduite) pourrait être réalisé par cette méthode assistée par micro-ondes.

## EXEMPLE 3

L'extraction par entraînement à la vapeur de cèdre produit une huile essentielle qui a un contenu trop élevé en composantes peu volatiles. Pour remédier à ce problème il faut raccourcir la durée de l'extraction ou effectuer une distillation fractionnée subséquente. La première solution implique des réductions de rendement coûteuses alors que la seconde entraine des coûts de production plus élevés et un temps de production plus que doublé. Cette invention peut être utilisée pour alléger ces problèmes en produisant deux fractions distinctes, en un temps total de production qui est malgré tout plus court que le temps requis pour effectuer une seule extraction par entraînement à la vapeur. De plus, la fraction légère ou hexanique obtenue par cette extraction en deux étapes possédait une valeur de marché supérieure comparativement à l'extrait obtenu par entraînement à la vapeur parcequ'elle était plus propre et contenait moins de composantes lourdes et indésirables. Le Tableau III démontre ces propriétés à partir d'extraits qui furent obtenus quand du cèdre frais a été soumis à un entraînement à la vapeur traditionnel pendant 2 heures lors d'une expérience, et à deux irradiations aux micro-ondes de 30 secondes chacune, en série, alors qu'il était immergé dans de l'éthanol d'abord et dans de l'hexane ensuite, dans une autre expérience. Les données du Tableau III sont normalisées en fonction des dix composantes les plus importantes de l'extrait obtenu par entraînement à la vapeur et utilisé comme référence, telles que quantifiées par chromatographie en phase gazeuse (sur une colonne de type DB-5 avec une programmation de température appropriée). Cette procédure chromatographique est la méthode habituelle pour évaluer le contenu d'une huile essentielle. La puissance de la deuxième irradiation aux micro-ondes a été réduite à 312,5 watts (de 625 watts) pour l'extraction dans l'hexane de façon à diminuer les coûts de transformation et à prendre en considération le fait que le système vasculaire du matériel végétal avait déjà été disloqué lors de la première irradiation. Nous avons trouvé lors d'autres essais que d'effectuer un entraînement à la vapeur sur du matériel qui avait été préalablement immergé dans de l'éthanol et soumis à une irradiation micro-ondes produit un extrait dont le contenu est similaire à l'extrait hexanique décrit au Tableau III, *i.e.* dévolu de sa fraction lourde.

## TABLEAU III

| Mode d'extraction | 10 composantes de l'huile essentielle de cèdre (%) les plus importantes | | | | | | | | | |
|---|---|---|---|---|---|---|---|---|---|---|
| | 1 | 2 | 3 | 4 | 5 | 6 | 7 | 8 | 9 | 10 |
| Entraînement-vapeur | 2.02 | 15.9 | 61.3 | 10.9 | 3.05 | 1.86 | 1.93 | 0.92 | 0.97 | 1.26 |
| Micro-ondes: | | | | | | | | | | |
| Extrait éthanolique | 0 | 0 | 3.15 | 0 | 0 | 0 | 0 | 0 | 39.6 | 54.3 |
| Extrait hexanique | 2.63 | 14.1 | 59.7 | 11.1 | 3.68 | 0 | 5.03 | 3.85 | 0 | 0 |

Une utilisation séquentielle du procédé micro-ondes de cette invention, en combinaison avec des solvants ou des systèmes de solvants utilisés en série a produit, dans cet exemple particulier, une huile essentielle (extrait hexanique) dont la valeur de marché est supérieure, à cause de sa plus grande propreté comparativement au produit obtenu par entraînement à la vapeur, parce que l'extrait hexanique était dévolu de composantes plus lourdes et indésirables qui ont été enlevées lors de la première irradiation aux micro-ondes dans l'éthanol. L'extrait éthanolique, quant à lui, peut être utilisé de la même façon que l'on utilise les fractions obtenues par des procédés de distillation fractionnée plus ardus et plus coûteux, *e.g.* "tel quel" dans des formulations d'oléorésines. Une autre caractétistique de cette invention réside dans le fait que l'éthanol et l'hexane utilisés dans ces essais sont demeurés froid, minimisant ainsi les principaux risques de feu et d'explosion de même que les besoins spéciaux en matière de ventilation normalement associés avec les usines d'extraction traditionnelles où des solvants infalmmables et/ou volatiles sont utilisés.

## EXEMPLE 4

Il est bien reconnu que certains extraits de produits naturels sont très sensibles à tout traitement thermique à cause de la labilité de son contenu. L'ail souffre fortement de ce phénomène qui représente une barrière majeure à la production d'un extrait de qualité reproductible qui peut satisfaire la demande du consommateur pour une uniformité de leurs produits. Il a été démontré dans la littérature qu'une grande partie des extraits d'ail connus à ce jour sont constitués d'artefacts qui sont produits durant le processus d'extraction utilisant une source thermique. L'entraînement à la vapeur, bien que considéré comme étant un traitement thermique relativement doux, souffre des mêmes pièges, *i.e.* il conduit à des artefacts de même acabit dans le cas de l'ail. La température de l'ail dans le système utilisé tout au long de cet exemple est demeurée tout près de la température ambiante.

De l'ail, contenant environ 30% d'eau, a été subdivisé en morceaux d'environ 1 cm de logueur. Des échantillons d'environ 100 g de ce même matériel ont été extraits par entraînement à la vapeur pendant 2 heures. D'autres échantillons d'environ 100 g ont été dispersés dans environ 250 mL de dichlorométhane et soumis aux micro-ondes (625 watts, 2450 MHz) pour 30 secondes. L'huile extraite a été récupérée par évaporation sous vide et elle fut analysée par chromatographie en phase gazeuse.

Le Tableau IV montre que le contenu des extraits obtenus par irradiation aux micro-ondes contenaient deux produits souffrés inconnus, **B** et **C**. Les rendements relatifs calculés pour ces deux composés étaient très reproductibles d'un essai à l'autre.

### TABLEAU IV

| Composition des extraits d'ail (%) | | | | | | | | | | |
|---|---|---|---|---|---|---|---|---|---|---|
| Irradiation micro-ondes (30 s.; dichlorométhane) | | | Entraînement à la vapeur (2 heures) | | | | | | | |
| A* | B | C | A* | D | E | F | G | H | I | J |
| 22.2 | 28.4 | 49.4 | 14.7 | 5.80 | 45.9 | 9.92 | 8.96 | 4.84 | 5.96 | 3.94 |

*La composante A est la seule qui est commune aux deux extraits.

Les résultats de nos essais, tels qu'exemplifiés dans le Tableau IV montrent que l'utilisation de cette invention, dans cet exemple particulier, a produit un extrait d'ail stable constitué principalement des produits **B** et **C** qui ne sont pas des artefacts puisqu'ils étaient reproductibles d'essai en essai et qu'ils n'étaient pas altérés pas des conditions modifiées (comme c'est le cas pour des extraits d'ail obtenus par procédés d'extraction traditionnels). Le rapport des composantes B/C de l'extrait micro-ondes était reproductible en-deçà de 0,5% lors des divers essais. La composante A, qui est aussi présente dans l'extrait obtenu par entraînement à la vapeur variait davantage; il s'agit peut-être d'un artefact. Toutes les composantes de l'extrait obtenu par entraînement à la vapeur variaient beaucoup (plus de 10%) entre extraits qui avaient été produits au même moment et sous de mêmes conditions d'extraction. Il est apparent que l'utilisation de cette invention, *e.g.* tel que démontré dans cet exemple conduit, dans certains cas, au développement reproductible d'ingrédients naturels nouveaux pour l'industrie de l'alimentation (humaine et animale) qui n'étaient pas extractables avec toute autre technique d'extraction connue jusqu'ici.

## Revendications

1. Procédé pour extraire les produits solubles de divers matériels biologiques, comprenant les étapes qui consistent:

   (a) - à prévoir du matériel biologique sous forme subdivisée possédant une composante dispersée qui absorbe les micro-ondes;

   (b) - à mettre en contact ledit matériel subdivisé avec un extractant qui est transparent ou partiellement transparent aux micro-ondes et qui absorbe moins les micro-ondes que la composante dispersée en (a);

   (c) - à exposer le matériel subdivisé lorsqu'il est en contact avec suffisamment d'extractant pour permettre l'extraction à des micro-ondes possédant une fréquence qui est absorbée par ladite composante dudit matériel jusqu'à ce que ledit matériel soit chauffé de préférence à l'extractant et que l'extraction soit complétée substantivement;

   (d) - à séparer le matériel résiduel de la phase extractante et éventuellement

      (e) à récupérer le produit extrait.

2. Procédé selon la revendication 1, caractérisé en ce que le matériel biologique est du tissu végétal.

3. Procédé selon la revendication 1, caractérisé en ce que la composante dispersée est de l'humidité et le taux d'humidité se situe entre 40 et 90% en poids.

**4.** Procédé selon l'une quelconque des revendications 1 à 3, caractérisé en ce que le matériel biologique est suffisamment subdivisé pour que tout le matériel désiré soit accessible à l'extractant.

**5.** Procédé selon l'une quelconque des revendications 1 à 3, caractérisé en ce que l'extractant est partiellement transparent aux micro-ondes et une partie de l'extractant est imprégnée dans le matériel de façon à devenir une composante dispersée qui absorbe les micro-ondes avant l'étape (c).

**6.** Procédé selon l'une quelconque des revendications 1 à 3, caractérisé en ce que le matériel biologique contient des composantes recherchées qui sont labiles ou volatiles et l'extractant est choisi en fonction de sa grande transparence aux micro-ondes.

**7.** Procédé selon l'une quelconque des revendications 1 à 3, caractérisé en ce que le matériel biologique contient des composés indésirables qui sont labiles ou volatiles et l'extractant est choisi en fonction de sa transparence partielle aux micro-ondes de façon à permettre un échauffement suffisant dû à l'absorption des micro-ondes pour enlever ou décomposer ces mêmes composantes lors de l'irradiation aux micro-ondes.

**8.** Procédé selon l'une quelconque des revendications 1 à 3, caractérisé en ce que le matériel résiduel après l'étape (d) est mis en contact avec un deuxième extractant ayant des propriétés de solvant et/ou de pénétration différentes du premier et exposé aux micro-ondes pour une deuxième fois pour générer un deuxième produit d'extraction.

**9.** Procédé selon l'une quelconque des revendications 1 à 3, caractérisé en ce que le rapport de l'extractant au matériel brut (L.kg$^{-1}$) varie de 1/1 à 20/1.

**10.** Procédé selon l'une quelconque des revendications 1 à 3, caractérisé en ce que l'exposition aux micro-ondes a une durée de 10 à 100 secondes à une puissance variant de 200 à 1000 Watts et à une fréquence variant de 2000 à 30.000 MHz et la dose est choisie de façon à accroître l'extraction.

**11.** Procédé selon l'une quelconque des revendications 1 à 3, caractérisé en ce que le produit est récupéré de la phase extractante lors de l'étape (e) et en ce que la phase extractante une fois débarrassée de son extrait est réutilisée pour l'étape (b).

**12.** Procédé selon l'une quelconque des revendications 1 à 3, caractérisé en ce que le matériel biologique brut est sec et soumis à une hydratation ou à une réhydratation avant l'étape (c).

## Patentansprüche

**1.** Verfahren zur Extraktion von löslichen Produkten aus verschiedenen biologischen Materialien, umfassend die Schritte bestehend aus:
(a) Bereitstellen biologischen Materials in fein zerkleinerter Form, das einen dispergierten Bestandteil aufweist, der Mikrowellen absorbiert;
(b) Zusammenbringen des fein zerkleinerten Materials mit einem Extraktionsmittel, das für Mikrowellen durchlässig oder teilweise durchlässig ist und das die Mikrowellen weniger stark absorbiert als der dispergierte Bestandteil unter (a);
(c) Einwirkenlassen von Mikrowellen einer Frequenz, die von dem Bestandteil des Materials absorbiert wird, auf das fein zerkleinerte Material während es in Kontakt mit ausreichend Extraktionsmittel steht, um die Extraktion zu ermöglichen, bis das Material gegenüber dem Extraktionsmittel bevorzugt erwärmt und die Extraktion im wesentlichen vollständig ist;
(d) Abtrennen des verbliebenen Materials von der Extraktphase, und gegebenenfalls
(e) Gewinnen des extrahierten Produkts.

**2.** Verfahren nach Anspruch 1, dadurch gekennzeichnet, daß es sich bei dem biologischen Material um pflanzliches Gewebe handelt.

**3.** Verfahren nach Anspruch 1, dadurch gekennzeichnet, daß der dispergierte Bestandteil Feuchtigkeit aufweist und der Prozentanteil Feuchtigkeit zwischen 40 und 90 Gew.-% liegt.

4. Verfahren nach irgendeinem der Ansprüche 1 bis 3, dadurch gekennzeichnet, daß das biologische Material ausreichend fein zerkleinert ist, so daß alles gewünschte Material für das Extraktionsmittel zugänglich ist.

5. Verfahren nach irgendeinem der Ansprüche 1 bis 3, dadurch gekennzeichnet, daß das Extraktionsmittel teilweise durchlässig für die Mikrowellen ist und ein Teil des Extraktionsmittels in einer Weise in das Material imprägniert ist, daß es ein dispergierter Bestandteil wird, der die Mikrowellen vor Schritt (c) absorbiert.

6. Verfahren nach irgendeinem der Ansprüche 1 bis 3, dadurch gekennzeichnet, daß das biologische Material erwünschte Bestandteile enthält, die unbeständig oder flüchtig sind, und das Extraktionsmittel ausgewählt ist gemäß seiner hohen Durchlässigkeit für Mikrowellen.

7. Verfahren nach irgendeinem der Ansprüche 1 bis 3, dadurch gekennzeichnet, daß das biologische Material unerwünschte Verbindungen enthält, die unbeständig oder flüchtig sind, und das Extraktionsmittel gemäß seiner teilweisen Durchlässigkeit für Mikrowellen in einer Weise ausgewählt ist, daß ausreichende Erwärmung aufgrund der Absorption der Mikrowellen ermöglicht wird, um diese Bestandteile bei der Mikrowellenbestrahlung zu entfernen oder zu zersetzen.

8. Verfahren nach irgendeinem der Ansprüche 1 bis 3, dadurch gekennzeichnet, daß das nach Schritt (d) verbliebene Material mit einem zweiten Extraktionsmittel zusammengebracht wird, das von ersterem verschiedene Lösungsmittel- und/oder Penetrationseigenschaften aufweist, und ein zweites Mal den Mikrowellen ausgesetzt wird, um ein zweites Extraktionsprodukt zu ergeben.

9. Verfahren nach irgendeinem der Ansprüche 1 bis 3, dadurch gekennzeichnet, daß das Verhältnis von Extraktionsmittel zu Rohmaterial ($1 \cdot kg^{-1}$) sich von 1:1 bis 20:1 bewegt.

10. Verfahren nach irgendeinem der Ansprüche 1 bis 3, dadurch gekennzeichnet, daß die Einwirkung der Mikrowellen für eine Dauer von 10 bis 100 s mit einer Leistung von 200 bis 1000 W und einer Frequenz von 2000 bis 30 000 MHz erfolgt, und die Dosis so gewählt wird, daß sich die Extraktion erhöht.

11. Verfahren nach irgendeinem der Ansprüche 1 bis 3, dadurch gekennzeichnet, daß das Produkt aus der Extraktphase von Schritt (e) gewonnen wird, und daß die vom Extrahierten befreite Extraktphase für Schritt (b) wiederverwendet wird.

12. Verfahren nach irgendeinem der Ansprüche 1 bis 3, dadurch gekennzeichnet, daß das biologische Rohmaterial trocken ist und vor Schritt (c) einer Hydratation oder Rehydratation unterzogen wird.

## Claims

1. Process for extracting soluble products from various biological materials, comprising steps consisting in:
   a) - preparing biological material in subdivided form which possesses a dispersed component that absorbs microwave;
   b) - bringing the said subdivided material into contact with an extractant which is transparent or partially transparent to microwave and which absorbs microwave to a lesser extent than the dispersed component in (a);
   c) - exposing the subdivided material to microwave once it has been brought into contact with sufficient extractant to allow extraction at a frequency that is absorbed by the said component of the said material until the said material is heated in preference to the extractant and extraction is substantively completed;
   d) - separating the residual material from the extractant phase and possibly:
      e) - recovering the extracted product.

2. Process according to claim 1, characterized in that the biological material is plant tissue.

3. Process according to claim 1, characterized in that the dispersed component is moisture and the humidity rate is between 40% and 90% in weight.

4. Process according to any one of claims 1 to 3, characterized in that the biological material is sufficiently subdivided for all the desired material to be accessible to the extractant.

5. Process according to any one of claims 1 to 3, characterized in that the extractant is partially transparent to microwave and part of the extractant is impregnated into the material before step (c) so as to become a dispersed component which absorbs microwave energy.

6. Process according to any one of claims 1 to 3, characterized in that the biological material contains desired labile or volatile components and the extractant selected is highly transparent to microwave radiation.

7. Process according to any one of claims 1 to 3, characterized in that the biological material contains undesired labile or volatile components and the extractant is selected from materials partially transparent to microwave radiation so that sufficient heating due to microwave absorption will occur to drive off or decompose these same components during microwave irradiation.

8. Process according to any one of claims 1 to 3, characterized in that the residual material after step (d) is brought into contact with a second extractant having different solvent and/or penetration properties than the first, and exposed to microwave radiation a second time to generate a second extraction product.

9. Process according to any one of claims 1 to 3, characterized in that the extractant to feed material ratio $(L.kg^{-1})$ ranges from 1:1 to 20:1.

10. Process according to any one of claims 1 to 3, characterized in that the microwave exposure time ranges from 10 to 100 seconds at a power level ranging from 200 to 1,000 Watts and at a frequency ranging from 2,000 to 30,000 MHz, the dose being selected to enhance extraction.

11. Process according to any one of claims 1 to 3, characterized in that the product is recovered from the extractant phase in step (e), and the extractant phase once rid of its extract, is recycled to step (b).

12. Process according to any one of claims 1 to 3, characterized in that the biological feed material is hydrated or rehydrated prior to step (c).